# EUROPÄISCHE PATENTSCHRIFT

(11) **EP 3 105 857 B1**
(45) Veröffentlichungstag und Bekanntmachung des Hinweises auf die Patenterteilung: **20.12.2017**
(21) Anmeldenummer: 15704309.2
(22) Anmeldetag: 13.02.2015
(51) Int. Cl.: H04B 1/3822, G08G 1/16

(54) **FAHRZEUG-ZU-X-KOMMUNIKATIONSSYSTEM, FAHRZEUG UND VERFAHREN ZUM SENDEN VON FAHRZEUG-ZU-X-NACHRICHTEN**
VEHICLE-TO-X COMMUNICATION SYSTEM, VEHICLE, AND METHOD FOR TRANSMITTING VEHICLE-TO-X MESSAGES
SYSTÈME DE COMMUNICATION DE VÉHICULE À X, VÉHICULE ET PROCÉDÉ D'ENVOI DE MESSAGES DE VÉHICULE À X

(30) Priorität: 14.02.2014 DE 102014202781
(43) Veröffentlichungstag der Anmeldung: 21.12.2016
(73) Patentinhaber: Continental Teves AG & Co. OHG, 60488 Frankfurt (DE); Continental Automotive GmbH, 30165 Hannover (DE)
(72) Erfinder: STÄHLIN, Ulrich, 65760 Eschborn (DE); MENZEL, Marc, 35096 Weimar (Lahn) (DE); OWEN, Richard, 93049 Regensburg (DE)
(74) Vertreter: Wagner, Philipp
(86) Internationale Anmeldenummer: PCT/EP2015/053061
(87) Internationale Veröffentlichungsnummer: WO 2015/121404

(56) Entgegenhaltungen:
- DE-A1-102010 064 086
- US-A1- 2011 098 877
- US-A1- 2013 120 159

## Beschreibung

Die Erfindung betrifft ein Fahrzeug-zu-X-Kommunikationssystem, ein Fahrzeug mit einem solchen Fahrzeug-zu-X-Kommunikationssystem und ein Verfahren zum Senden von Fahrzeug-zu-X-Nachrichten.

Fahrzeug-zu-X-Kommunikation ist derzeit Stand der Forschung bzw. Vorentwicklung und befindet sich in einem Standardisierungsprozess. Insbesondere kann Fahrzeug-zu-X-Kommunikation auf dem Standard IEEE 802.11p basieren. Typischerweise umfasst Fahrzeug-zu-X-Kommunikation sowohl eine Fahrzeug-zu-Fahrzeug-Kommunikation wie auch eine Fahrzeug-zu-Infrastruktur-Kommunikation. Somit können Informationen sowohl zwischen unterschiedlichen Fahrzeugen wie auch zwischen Infrastruktur und Fahrzeugen ausgetauscht werden. Ersteres ermöglicht beispielsweise den Austausch von Positions- und Geschwindigkeitsinformationen zwischen Fahrzeugen, um Kollisionen zu vermeiden. Letzteres ermöglicht beispielsweise die elektronische Bekanntgabe von Geschwindigkeitsbeschränkungen oder Verkehrsinformationen.

Bei einem Fahrzeug-zu-X-Kommunikationssystem ist typischerweise sowohl die Funktionalität der Fahrzeug-zu-Fahrzeug-Kommunikation wie auch der Fahrzeug-zu-Infrastruktur-Kommunikation implementiert. Mögliche Empfänger von durch das Fahrzeug-zu-X-Kommunikationssystem ausgesandten Nachrichten können sich überall um das Fahrzeug herum befinden. Dementsprechend ist es grundsätzlich vorteilhaft, wenn Signale in einem Winkel von 360° um das Fahrzeug abgestrahlt werden. Idealerweise kann hierfür eine Antenne verwendet werden, welche nach allen Seiten entsprechend strahlt. Dies ist jedoch bei manchen Fahrzeugen aufgrund der Bauart oder auch aufgrund spezieller Sonderausstattungen wie beispielsweise Schiebedächer nicht immer möglich. In solchen Fällen können zwei Antennen verwendet werden. Um die Kanallast in Bereichen zu reduzieren, welche von jeweiligen Abstrahlcharakteristika beider Antennen erfasst werden, wird in einem solchen Fall ein Kommunikationssystem mit Sendediversität verwendet. Dieses sorgt dafür, dass Signale über beide Antennen so abgestrahlt werden, dass diese trotz gleichzeitiger Abstrahlung auch in Bereichen mit überlappenden Abstrahlcharakteristika nicht zu Problemen führen. Kommunikationssysteme mit Sendediversität sind jedoch sehr teuer, was den Systempreis deutlich erhöht und einer möglichst schnellen, weiten Verbreitung von Fahrzeug-zu-X-Kommunikation, welche für einen Erfolg der Technologie erforderlich ist, im Wege steht.

In der DE 10 2010 064 086 A1 ist Fahrzeugantennensystem für V2X-Kommunikation mit einer ersten Antenne geeignet für V2X Kommunikation und einer zweiten Antenne geeignet für V2X Kommunikation sowie einer Kommunikationseinheit für V2X Kommunikation, welche mit der ersten Antenne und der zweiten Antenne verbunden ist, beschrieben. Dabei sind die erste Antenne und die zweite Antenne in Fahrzeugbauteile integrierbar, wobei die Antennen an im Wesentlichen korrespondierenden Positionen rechts bzw. links von dem Fahrzeug angeordnet werden. Das Fahrzeugantennensystem weist weiterhin eine Schaltmatrix zum selektiven Durchschalten von Verbindungen zu den Antennen auf. Diese kann z. B. so gestaltet sein, dass sie im Falle eines Unfalls oder einer Panne eine im Wesentlichen nach hinten gerichtete Abstrahlcharakteristik aufweist, um z. B. den rückwärtigen Verkehr zu warnen.

Es ist deshalb eine Aufgabe der Erfindung, ein Fahrzeug-zu-X-Kommunikationssystem mit zumindest zwei Antennen vorzusehen, welches zu geringeren Kosten realisierbar ist. Es ist des Weiteren eine Aufgabe der Erfindung, ein Fahrzeug mit einem solchen Fahrzeug-zu-X-Kommunikationssystem vorzusehen. Außerdem ist es eine Aufgabe der Erfindung, ein Verfahren zum Senden von Fahrzeug-zu-X-Nachrichten vorzusehen, welches bei Verwendung mehrerer Antennen unter Verwendung von preiswerteren Komponenten ausführbar ist.

Dies wird erfindungsgemäß durch ein Fahrzeug-zu-X-Kommunikationssystem nach Anspruch 1, ein Fahrzeug nach Anspruch 14 sowie ein Verfahren nach Anspruch 15 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Fahrzeug-zu-X-Kommunikationssystem für ein Fahrzeug, aufweisend:
- eine erste Antenne,
- eine zweite Antenne, und
- eine Kommunikationseinheit, welche mit der ersten Antenne und der zweiten Antennen zum Senden von Signalen über die Antenne verbunden ist,
- wobei die Kommunikationseinheit dazu ausgebildet ist, ein Signal, welches Teil einer Fahrzeug-zu-X-Kommunikation ist, selektiv über die erste Antenne oder über die zweite Antenne zu senden.

Mittels des erfindungsgemäßen Fahrzeug-zu-X-Kommunikationssystems ist es möglich, auf Sendediversität zu verzichten und trotzdem zwei Antennen zu betreiben. Typischerweise strahlen die erste Antenne und die zweite Antenne in unterschiedliche Richtungen ab. Beispielsweise kann die erste Antenne nach vorne und die zweite Antennen nach hinten abstrahlen. Jeweilige seitliche Bereiche werden dabei typischerweise von den Antennen derart mit erfasst, dass insgesamt eine vollständige Abdeckung der Umgebung des Fahrzeugs erreicht wird. Alternativ können die Antennen auch seitlich abstrahlen. Dazu können sie beispielsweise in Außenspiegeln angeordnet sein.

Durch das selektive Abstrahlen über die erste Antenne und die zweite Antenne ist es möglich, Nachrichten derart zu senden, dass sie nicht zu einer erhöhten Kanallast führen. Dies kann auch als Pseudo-Sendediversität bezeichnet werden. Auf den Einsatz von teuren Kommunikationsbauelementen mit Sendediversität kann verzichtet werden.

Die Kommunikationseinheit oder ein Teil davon kann beispielsweise als elektronisches Bauelement ausgeführt sein. Beispielsweise kann sie als Mikroprozessor, Mikrocomputer, Anwendungsspezifischer Integrierter Schaltkreis (ASIC) oder als feldprogrammierbare Steuerung (FPGA) ausgeführt sein. Insbesondere kann sie Prozessormittel und Speichermittel aufweisen, wobei in den Speichermitteln Programmcode gespeichert ist, bei dessen Ausführung sich die Prozessormittel in definierter Weise verhalten.

Es sei verstanden, dass das Fahrzeug-zu-X-Kommunikationssystem grundsätzlich mit einer beliebigen Anzahl von Antennen betrieben werden kann, sofern mindestens zwei Antennen vorhanden sind. Beispielsweise können also auch drei, vier oder mehr Antennen verwendet werden. Dies erlaubt es, eine gleichmäßigere Abdeckung der Umgebung des Fahrzeugs zu erreichen.

Bevorzugt ist die Kommunikationseinheit dazu ausgebildet, das Signal entweder ausschließlich über die erste Antenne zu senden oder ausschließlich über die zweite Antenne zu senden. Diese Formulierung kann auch als Alternative zu der Formulierung eines selektiven Sendens über die erste Antenne oder über die zweite Antenne angesehen werden.

Gemäß einer Ausführung ist die Kommunikationseinheit dazu ausgebildet, beim Senden eines Signals über die erste Antenne das Signal nicht gleichzeitig über die zweite Antenne zu senden und beim Senden eines Signals über die zweite Antenne das Signal nicht gleichzeitig über die erste Antenne zu senden. Auch diese Formulierung kann als alternative Formulierung zum selektiven Senden über die erste Antenne oder über die zweite Antenne angesehen werden.

Gemäß einer einfach zu realisierenden Ausführung wird das Fahrzeug-zu-X-Kommunikationssystem derart betrieben, dass Signale unabhängig von ihrer Art immer abwechselnd über die erste Antenne und über die zweite Antenne gesendet werden. Dies kann beispielsweise bei Nachrichten, welche die aktuelle Position des Fahrzeugs angeben und lediglich zur allgemeinen Information dienen, eine vernünftige Vorgehensweise sein. Dabei kann es sich beispielsweise um Cooperative Awareness Messages (CAM) handeln.

Bevorzugt ist die Kommunikationseinheit dazu ausgebildet, in Abhängigkeit von der Art von zu sendenden Signalen und/oder in Abhängigkeit von einer Verkehrssituation und/oder in Abhängigkeit von Fahrparametern zu entscheiden, ob das Signal über die erste Antenne oder über die zweite Antenne gesendet wird. Dies erlaubt eine bessere Anpassung des Sendeverhaltens an unterschiedliche Parameter und Bedingungen. Beispielsweise kann ein Signal, welches die aktuelle Position des Fahrzeugs angibt, insbesondere in Form von Cooperative Awareness Messages (CAM), bei höherer Geschwindigkeit häufiger nach vorne gesendet werden und nicht so häufig nach hinten, da dieses Signal bei hoher Geschwindigkeit eher für vorausfahrenden Verkehr interessant ist. Bei Fahrzeugen mit langsamer Geschwindigkeit, beispielsweise Lastkraftwagen auf Autobahnen, können derartige Signale häufiger nach hinten gesendet werden, da die Informationen eher für den rückwärtigen Verkehr relevant sind. Nachrichten über Unfälle oder Pannen sind meistens ausschließlich für den rückwärtigen Verkehr interessant, so dass diese beispielsweise ausschließlich über eine hintere Antenne gesendet werden können.

Gemäß einer bevorzugten Ausführung ist die Kommunikationseinheit dazu ausgebildet, ein Signal, welches für Verkehrsteilnehmer hinter dem Fahrzeug nicht oder nur wenig relevant ist und/oder welches nur oder überwiegend für Verkehrsteilnehmer vor dem Fahrzeug relevant ist, ausschließlich über die erste Antenne zu senden. Dies ist insbesondere dann vorteilhaft, wenn die erste Antenne überwiegend nach vorne abstrahlt. Bei derartigen Nachrichten kann es sich beispielsweise um Positions- und Bewegungsdaten eines schnell fahrenden Fahrzeugs handeln. Auch Signale, welche beispielsweise Informationen über ein Sondereinsatzrecht des Fahrzeugs beinhalten, können bevorzugt nach vorne abgestrahlt werden. Derartige Nachrichten sind typischerweise überwiegend für den vorausfahrenden Verkehr interessant.

Gemäß einer bevorzugten Ausführung ist die Kommunikationseinheit dazu ausgebildet, ein Signal, welches für Verkehrsteilnehmer vor dem Fahrzeug nicht oder nur wenig relevant ist und/oder welches nur oder überwiegend für Verkehrsteilnehmer hinter dem Fahrzeug relevant ist, ausschließlich über die zweite Antenne zu senden. Dies ist insbesondere dann vorteilhaft, wenn die zweite Antenne überwiegend nach hinten abstrahlt. Beispielsweise können auf Autobahnen Informationen über Notbremsmanöver oder Liegenbleiber in Form von Decentralized Environmental Notification Messages (DEMM) auf diese Weise ausschließlich nach hinten gesendet werden, da derartige Informationen für den vorausfahrenden Verkehr nicht relevant sind und lediglich nachfolgende Verkehrsteilnehmer warnen sollen.

Gemäß einer bevorzugten Ausführung ist die Kommunikationseinheit dazu ausgebildet, eine Mehrzahl von in jeweiligen Zeitabständen zueinander beabstandeten Signalen entsprechend eines Sendemusters zu senden, wobei das Sendemuster vorgibt, in welcher Reihenfolge Signale über die erste Antenne oder die zweite Antenne gesendet werden. Das Sendemuster kann dabei eine Abfolge von Zeichen sein, welche angibt, ob ein jeweiliges Signal über die erste oder die zweite Antenne gesendet wird. Dieses Vorgehen ermöglicht eine Anpassung des Sendeverhaltens bei periodisch wiederkehrenden Signalen an bestimmte Fahrzeug- oder Verkehrsparameter.

Im einfachsten Fall kann das Sendemuster so ausgebildet sein, dass die Signale abwechselnd über die erste und die zweite Antenne gesendet werden. In vielen Fällen wird dadurch ein guter Kompromiss erzielt.

Bevorzugt ist die Kommunikationseinheit dazu ausgebildet, ein Sendemuster in Abhängigkeit von der Art von zu sendenden Signalen und/oder in Abhängigkeit von einer Verkehrssituation und/oder in Abhängigkeit von Fahrparametern festzulegen. Dies ermöglicht eine deutlich bessere Anpassung des Sendeverhaltens an jeweilige Fahrzeugparameter oder Verkehrssituationen.

Beispielsweise kann das Sendemuster in Abhängigkeit von der Geschwindigkeit festgelegt werden. Bei hoher Geschwindigkeit können beispielsweise Signale, welche Position und Geschwindigkeit des Fahrzeugs angeben, häufiger nach vorne gesendet werden, beispielsweise können derartige Signale mit einem Verhältnis von 5:1, 4:1 oder 3:1 nach vorne und hinten gesendet werden. Bei niedrigerer Geschwindigkeit kann ein solches Verhältnis beispielsweise umgekehrt werden, da die Signale dann überwiegend für nachfolgende Verkehrsteilnehmer relevant sind.

Führt das Fahrzeug ein Überholmanöver aus, so kann das Sendemuster derart eingestellt werden, dass Signale über Position und Geschwindigkeit ausschließlich nach vorne gesendet werden, da in diesem Fall die Warnung des Gegenverkehrs höchste Priorität hat. Das Sendemuster kann auch abhängig von der Position eingestellt werden, so kann beispielsweise eine Abstrahlung bei Annäherung an Kreuzungen derart erfolgen, dass ein Kreuzungsassistenzsystem in den Fahrzeugen unterstützt wird.

Es sei verstanden, dass typischerweise beim Festlegen des Sendemusters die jeweiligen Abstrahlcharakteristika der Antennen berücksichtigt werden.

Bevorzugt ist die Kommunikationseinheit dazu ausgebildet, das Sendemuster derart festzulegen, dass ein Anteil von Sendungen über die erste Antenne umso höher ist, je irrelevanter die Signale für Verkehrsteilnehmer hinter dem Fahrzeug sind und/oder je relevanter die Signale für Verkehrsteilnehmer vor dem Fahrzeug sind. Dies ermöglicht eine einfache Anpassung des Sendemusters an die Relevanz der Signale für die jeweiligen Verkehrsteilnehmer, insbesondere wenn die erste Antenne nach vorne abstrahlt.

Weiter bevorzugt ist die Kommunikationseinheit dazu ausgebildet, das Sendemuster derart festzulegen, dass ein Anteil von Sendungen über die zweite Antenne umso höher ist, je irrelevanter die Signale für Verkehrsteilnehmer vor dem Fahrzeug sind und/oder je relevanter die Signale für Verkehrsteilnehmer hinter dem Fahrzeug sind. Auch dies ermöglicht eine entsprechend vorteilhafte Anpassung des Sendemusters an die Relevanz der Signale für die jeweiligen Verkehrsteilnehmer, insbesondere wenn die zweite Antenne nach hinten abstrahlt.

Gemäß einer Ausführung weist die Kommunikationseinheit eine erste Sendeeinheit, welche mit der ersten Antenne verbunden ist, eine zweite Sendeeinheit, welche mit der zweiten Antenne verbunden ist, und eine Steuerungseinheit auf, welche mit der ersten Sendeeinheit und mit der zweiten Sendeeinheit verbunden ist. Die Steuerungseinheit ist dazu ausgebildet, zur Sendung eines Signals über die erste Antenne die erste Sendeeinheit anzusteuern und zur Sendung eines Signals über die zweite Antenne die zweite Sendeinheit anzusteuern. Die Sendeeinheit ist bevorzugterweise als ein Kommunikationschip ausgebildet.

Typischerweise sind in einem solchen Fall die Sendeeinheiten nicht synchronisiert. Dies bedeutet insbesondere, dass sie nicht dazu ausgebildet sind, Sendediversität vorzusehen. Der Preis der Sendeeinheiten kann damit deutlich reduziert werden.

Gemäß einer hierzu typischerweise alternativen Ausführung weist die Kommunikationseinheit eine Antennenweiche, eine Sendeeinheit und eine Steuerungseinheit auf, wobei die Antennenweiche mit der ersten Antenne, der zweiten Antenne und der Sendeeinheit verbunden ist, und wobei die Steuerung dazu ausgebildet ist, mittels der Antennenweiche auszuwählen, ob ein Signal über die erste Antenne oder über die zweite Antenne gesendet werden soll.

Bei dieser Ausführung kann anstelle einer zweiten Sendeeinheit eine Antennenweiche verwendet werden. Die Antennenweiche kann beispielsweise in Form eines SPDT RF-Schalters ausgeführt sein. Die Antennenweiche kann beispielsweise über einen GPIO einer Steuer-ECU bzw. eines Mikrocontrollers angesteuert werden. Beispielsweise kann die Ausgabe einer logischen 0 bedeuten, dass die erste Antenne verwendet wird, wohingegen die Ausgabe einer logischen 1 bedeutet, dass die zweite Antenne verwendet wird.

Gemäß einer Ausführung ist die Kommunikationseinheit dazu ausgebildet, Signale ausschließlich über eine der Antennen zu senden, wenn sie ermittelt hat, dass das Senden über diese Antenne in einer aktuellen Verkehrssituation und/oder bei aktuellen Fahrparametern für die meisten Verkehrsteilnehmer ausreichend ist. Die Kommunikationseinheit ist ferner bevorzugt dazu ausgebildet, Signale auch über die andere Antenne zu senden, wenn sie ermittelt hat, dass das Senden über nur eine Antenne in der aktuellen Verkehrssituation und/oder bei den aktuellen Fahrparametern für die meisten Verkehrsteilnehmer nicht mehr ausreichend ist. Dabei wird typischerweise auch die Abstrahlcharakteristik berücksichtigt. Dies ermöglicht eine vorteilhafte Anpassung des Sendeverhaltens an Verkehrssituationen und Fahrparameter. Bezüglich möglicher Ausführungen sei auf die entsprechende Beschreibung weiter oben verwiesen.

Die Erfindung betrifft des Weiteren ein Fahrzeug mit einem erfindungsgemäßen Fahrzeug-zu-X-Kommunikationssystem, wobei die erste Antenne und die zweite Antenne derart an dem Fahrzeug angeordnet sind, dass sie mit jeweiligen Abstrahlcharakteristika abstrahlen.

Bei dem erfindungsgemäßen Fahrzeug werden die weiter oben mit Bezug auf das erfindungsgemäße Fahrzeug-zu-X-Kommunikationssystem erläuterten Vorteile für ein Fahrzeug nutzbar gemacht. Insbesondere kann das Fahrzeug auch bei schwierigen Einbauverhältnissen für Antennen mit einem Fahrzeug-zu-X-Kommunikationssystem ausgerüstet werden, ohne dass hierfür überhöhte Kosten anfallen. Hinsichtlich des Fahrzeug-zu-X-Kommunikationssystems kann auf alle weiter oben beschriebenen Ausführungen und Varianten zurückgegriffen werden. Erläuterte Vorteile gelten entsprechend.

Vorteilhaft überlappen sich die Abstrahlcharakteristika der ersten und der zweiten Antenne nur wenig. Unter dem Begriff "wenig" wird hier insbesondere verstanden, dass in überlappenden Bereichen von Empfängern keine Störung wahrgenommen würde, wenn Signale gleichzeitig gesendet werden würden. Es kann darunter auch verstanden werden, dass Bereiche, in welchen andere Verkehrsteilnehmer abgestrahlte Signale von beiden Antennen empfangen können, klein sind. Es sei jedoch verstanden, dass ein Überlapp der Abstrahlcharakteristika der Funktionsweise des erfindungsgemäßen Fahrzeug-zu-X-Kommunikationssystems nicht entgegensteht.

In einer typischen Ausführung ist die erste Antenne derart angeordnet, dass sie nach vorne abstrahlt, wohingegen die zweite Antenne derart angeordnet ist, dass sie nach hinten abstrahlt. Damit können insbesondere die weiter oben erläuterten Vorgehensweisen, welche von der Relevanz für vorausfahrende und nachkommende Fahrzeuge abhängen, implementiert werden. Die beiden Antennen können jedoch beispielsweise auch derart angeordnet sein, dass die erste Antenne nach links abstrahlt und die zweite Antenne nach rechts abstrahlt. Dies ermöglicht beispielsweise eine Anordnung der Antennen in den Außenspiegeln des Fahrzeugs.

Die Erfindung betrifft des Weiteren ein Verfahren zum Senden von Fahrzeug-zu-X-Nachrichten, welches folgende Schritte aufweist:
- Erzeugen eines Signals, welches eine jeweilige Fahrzeug-zu-X-Nachricht enthält,
- Bestimmen, ob das Signal über eine erste Antenne oder eine zweite Antenne zu senden ist, und
- abhängig davon selektives Senden des Signals über die erste Antenne oder die zweite Antenne.

Auch mittels des erfindungsgemäßen Verfahrens werden die weiter oben bereits mit Bezug auf das erfindungsgemäße Fahrzeug-zu-X-Kommunikationssystem erläuterten Vorteile erreicht. Insbesondere kann das Sendeverhalten von der Relevanz für Verkehrsteilnehmer abhängig gemacht werden. Es sei verstanden, dass alle weiter oben mit Bezug auf das erfindungsgemäße Fahrzeug-zu-X-Kommunikationssystem und das erfindungsgemäße Fahrzeug beschriebenen Merkmale, Varianten und Ausführungen entsprechend auch in Bezug auf das erfindungsgemäße Verfahren anwendbar sind. Somit gehört die Anwendung der entsprechenden beschriebenen Merkmale, Varianten und Ausführungen für das erfindungsgemäße Verfahren zur Offenbarung dieser Anmeldung. Erläuterte Vorteile gelten entsprechend.

Als Fahrzeug-zu-X-Botschaften oder Fahrzeug-zu-X-Nachrichten werden im Sinne der Erfindung auch Botschaften verstanden, die zwischen einem Fahrzeug und einer Fernsteuerung ausgetauscht werden. Eine solche Fernsteuerung kann beispielsweise dazu verwendet werden, um einen automatisierten Einparkvorgang zu aktivieren und/oder zu steuern. Dabei können Antennen des Fahrzeugs, beispielsweise die erste Antenne und die zweite Antenne, derart angesteuert werden, dass abhängig von Parametern wie beispielsweise dem gefahrenen Weg und/oder den verwendeten Lenkeinschlägen und/oder der Bewegung der Fernsteuerung jeweils diejenige Antenne die Botschaft oder Nachricht bzw. ein diese enthaltendes Signal versendet, die in Richtung der Fernsteuerung die bessere Abstrahlcharakteristik aufweist. Als Kommunikationstechnik können hier oder auch in anderen Fällen beispielsweise WLAN nach 802.11, Bluetooth, ZigBee, LTE-direct oder andere Kommunikationstechniken verwendet werden, die typischerweise für den direkten Datenaustausch zweier Geräte gedacht sind.

Weitere Merkmale und Vorteile wird der Fachmann den nachfolgend mit Bezug auf die beigefügte Zeichnung beschriebenen Ausführungsbeispielen entnehmen. Dabei zeigen:
- Fig. 1:: ein Fahrzeug mit einem Fahrzeug-zu-X-Kommunikationssystem gemäß einem ersten Ausführungsbeispiel,
- Fig. 2:: ein Fahrzeug mit einem Fahrzeug-zu-X-Kommunikationssystem gemäß einem zweiten Ausführungsbeispiel.

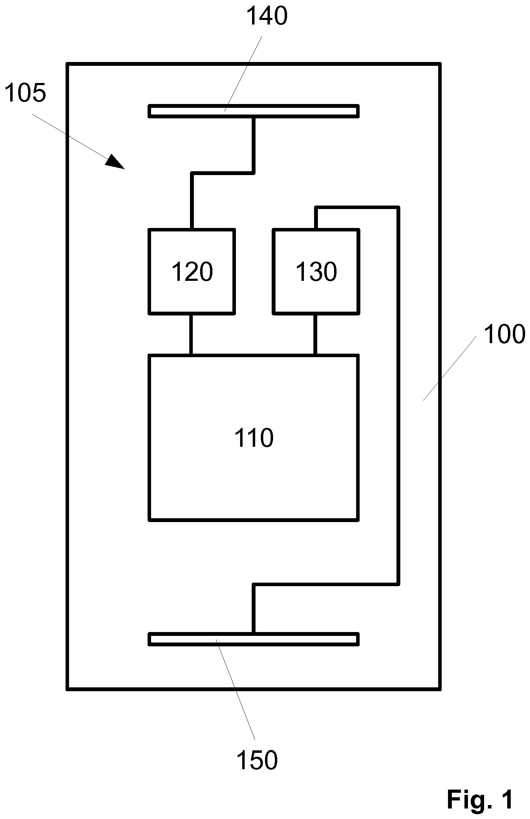

Fig. 1 zeigt schematisch ein Fahrzeug 100. Das Fahrzeug 100 weist ein ebenfalls schematisch dargestelltes Fahrzeug-zu-X-Kommunikationssystem 105 auf.

Das Fahrzeug-zu-X-Kommunikationssystem 105 weist eine Steuerungseinheit 110, eine erste Sendeeinheit 120, eine zweite Sendeeinheit 130, eine erste Antenne 140 und eine zweite Antenne 150 auf. Die Steuerungseinheit 110 ist mit der ersten Sendeeinheit 120 und der zweiten Sendeeinheit 130 verbunden. Die erste Sendeeinheit 120 ist mit der ersten Antenne 140 verbunden. Die zweite Sendeeinheit 130 ist mit der zweiten Antenne 150 verbunden. Die Steuerungseinheit 110, die erste Sendeeinheit 120 und die zweite Sendeeinheit 130 bilden zusammen eine Kommunikationseinheit.

Die beschriebene Anordnung ermöglicht es, dass die Steuerungseinheit 110 über die erste Sendeeinheit 120 Signale über die erste Antenne 140 absendet. Ebenso ermöglicht sie, dass die Steuerungseinheit 110 über die zweite Sendeeinheit 130 Signale über die zweite Antenne 150 absendet. Die Steuerungseinheit 100 kann somit auswählen, über welche Antenne 140, 150 ein Signal gesendet werden soll, indem sie die entsprechend zugehörige Sendeinheit 120, 130 ansteuert.

Die erste Antenne 140 ist dazu ausgebildet, im Wesentlichen nach vorne abzustrahlen. Die zweite Antenne 150 ist dazu ausgebildet, im Wesentlichen nach hinten abzustrahlen. Die jeweiligen seitlichen Bereiche werden von den beiden Antennen 140, 150 jeweils mit erfasst.

Die Steuerungseinheit 110 ist insbesondere dazu ausgebildet, laufend periodisch Signale auszusenden, welche die aktuelle Position und Fahrzeuggeschwindigkeit des Fahrzeugs 100 enthalten. Während derartige Informationen grundsätzlich für alle umgebenden Verkehrsteilnehmer relevant sind, variiert die Relevanz für sich vor dem Fahrzeug befindende Verkehrsteilnehmer und sich hinter dem Fahrzeug befindende Verkehrsteilnehmer mit der Geschwindigkeit und mit der Fahrsituation.

Wenn das Fahrzeug 100 eine im Vergleich zum üblicherweise umgebenden Verkehr langsame Geschwindigkeit aufweist, beispielsweise bei einem Lastkraftwagen auf einer Autobahn, so sind die Signale hauptsächlich für den rückwärtigen Verkehr relevant.

Die Steuerungseinheit 110 ist dazu ausgebildet, in diesem Fall die Signale derart zu senden, dass immer drei Signale über die zweite Antenne 150 und dann ein Signal über die erste Antenne 140 gesendet werden. Insgesamt werden also dreimal so viele Signale über die zweite Antenne 150 gesendet wie über die erste Antenne 140. Fährt das Fahrzeug dagegen auf der Autobahn bei hoher Geschwindigkeit, so sind die Signale hauptsächlich für den vorausfahrenden Verkehr interessant. Die Steuerungseinheit 110 ist dazu ausgebildet, in diesem Fall immer drei Signale über die erste Antenne 140 und dann ein Signal über die zweite Antenne 150 zu senden. Dies trägt der Relevanz der Signale für die umgebenden Verkehrsteilnehmer in geeigneter Weise Rechnung. Auf ein teures Vorsehen von Sendediversität kann verzichtet werden, was den Systempreis deutlich senkt. Anstelle des Verhältnisses von 3:1 können auch andere Verhältnisse gewählt werden, beispielsweise 5:1 oder 7:2, wobei das Verhältnis idealerweise von der gefahrenen Geschwindigkeit abhängt.

Sofern das Fahrzeug 100 einen Unfall oder eine Panne hat oder ein Notbremsmanöver einleitet, so werden dies anzeigende Nachrichten beispielsweise ausschließlich über die zweite Antenne 150 gesendet. Dies trägt der Tatsache Rechnung, dass derartige Nachrichten ausschließlich für den rückwärtigen Verkehr relevant sind, um eine Kollision zu vermeiden. Sofern das Fahrzeug 100 über Sondereinsatzrechte verfügt, so wird diese Information ausschließlich über die erste Antenne 140 gesendet, da diese Information beispielsweise ausschließlich für den vorausfahrenden Verkehr interessant ist.

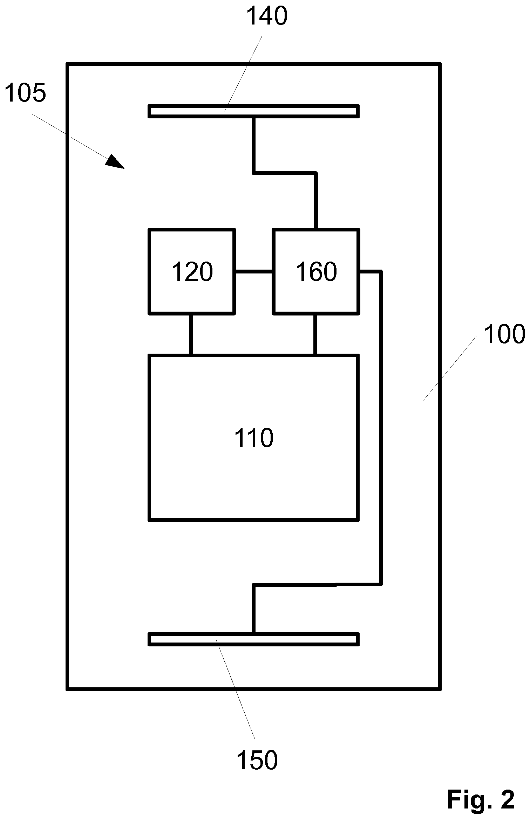

Fig. 2 zeigt ein Fahrzeug 100 mit einem Fahrzeug-zu-X-Kommunikationssystem 105 gemäß einem zweiten Ausführungsbeispiel. Das Fahrzeug-zu-X-Kommunikationssystem 105 gemäß dem zweiten Ausführungsbeispiel ist ähnlich aufgebaut zu dem Fahrzeug-zu-X-Kommunikationssystem 105 gemäß dem ersten Ausführungsbeispiel. Im Unterschied dazu sind jedoch nicht zwei Sendeeinheiten 120, 130 vorgesehen, sondern es ist lediglich eine Sendeeinheit 120 vorgesehen, welche mit der Steuerungseinheit 110 verbunden ist. Des Weiteren ist eine Antennenweiche 160 vorgesehen, welche mit der Steuerungseinheit 110, der Sendeeinheit 120 und mit den beiden Antennen 140, 150 verbunden ist. Die Kommunikationseinheit wird bei dem zweiten Ausführungsbeispiel durch die Steuerungseinheit 110, die Sendeeinheit 120 und die Antennenweiche 160 gebildet.

Die Steuerungseinheit 110 sendet im Fall des zweiten Ausführungsbeispiels Signale grundsätzlich über die Sendeeinheit 120 und wählt mittels der Antennenweiche 160 aus, über welche der beiden Antennen 140, 150 gesendet werden soll. Dies ermöglicht den Verzicht auf eine zweite Sendeeinheit 130. Die weitere Funktionalität ist identisch zu dem Fahrzeug-zu-X-Kommunikationssystem 105 gemäß dem ersten Ausführungsbeispiel, so dass auf die obige Beschreibung verwiesen wird.

Nachfolgend erfolgt eine weitere Beschreibung von Merkmalen, welche für die Erfindung relevant sein können. Es sei verstanden, dass einzelne Merkmale in dieser Beschreibung Merkmalen der vorherigen Beschreibung anhand ihrer Funktionalität oder anhand anderer Kriterien zugeordnet werden können, aber nicht müssen. Alle nachfolgend beschriebenen Merkmale sind mit allen weiter oben beschriebenen Merkmalen in beliebigen Kombinationen und Unterkombinationen kombinierbar. Die Offenbarung dieser Anmeldung umfasst insbesondere auch jegliche Auswahl, Kombinationen oder Unterkombinationen von weiter oben beschriebenen Merkmalen, wobei eines oder mehrere der nachfolgend beschriebenen Merkmale explizit vom Schutz ausgenommen werden. Die nachfolgenden Ausführungen können beispielsweise auch als eigenständige Beschreibung einer Erfindung oder als Spezifizierung der bereits weiter oben beschriebenen Erfindung verstanden werden.

Im Stand der Technik sind bereits Fahrzeug-zu-X-Kommunikationssysteme bekannt, die sowohl zur Übertragung verkehrsbezogener Daten als auch verschiedener Service-Daten, wie etwa Unterhaltungsanwendungen, ausgebildet sind. Die Fahrzeug-zu-X-Kommunikation basiert dabei sowohl auf dem Datenaustausch zwischen Fahrzeugen untereinander (Fahrzeug-zu-Fahrzeug-Kommunikation) als auch auf dem Datenaustausch zwischen Fahrzeugen und Infrastruktureinrichtungen (Fahrzeug-zu-Infrastruktur-Kommunikation). Dieser Datenaustausch kann dabei z.B. auf dem WLAN-Standard IEEE 802.11p basieren, welcher sich gegenwärtig in der Vorentwicklung befindet. Unter anderem aufgrund der hohen Anforderungen an die Zuverlässigkeit der Fahrzeug-zu-X-Kommunikation ist es außerdem bekannt, zum Senden bzw. Empfangen von Fahrzeug-zu-X-Botschaften auf sog. Antennendiversity bzw. Diversity zurückzugreifen. Hierbei werden mehrere Antennen zum synchronen Senden bzw. Empfangen von Fahrzeug-zu-X-Botschaften bzw. allgemein zum Senden bzw. Empfangen von drahtlos übertragbaren Informationen genutzt.

Bei einem Fahrzeug-zu-X-Kommunikationssystem ist eine Abstrahlung der Botschaft 360° um das Fahrzeug herum grundsätzlich wünschenswert oder notwendig. Idealerweise kann dafür eine Antenne verwendet werden, die nach allen Seiten entsprechend strahlt. Jedoch ist das baulich bedingt nicht immer möglich, so dass teilweise zwei Antennen verwendet werden müssen. Um trotzdem eine akzeptable Abstrahlung der versendeten Botschaften zu erreichen, wird im Stand der Technik sog. Sendediversity verwendet.

Kommunikationschips für Fahrzeug-zu-X-Kommunikationssysteme mit Sendediversity sind jedoch teuer und werden daher aufgrund des herrschenden Kostendrucks üblicherweise nur dann eingesetzt, wenn es unvermeidbar notwendig ist. Daher sieht die typische Systemkonfiguration eines Fahrzeug-zu-X-Kommunikationssystems einen Kommunikationschip mit nur einer Anschlussmöglichkeit für eine Antenne vor. Wird nun für eine Zwei-Antennen-Lösung einfach ein zweiter Kommunikationschip zu dieser Systemkonfiguration ergänzt, so sind die beiden Kommunikationschips nicht synchronisiert und damit ist kein Sendediversity möglich. Ein Senden über beide Kommunikationschips würde eine Verdopplung der Kanallast in den überlappenden Bereichen der Abstrahlcharakteristik der beiden Antennen bedeuten und damit den Kanal zu stark belasten.

Erfindungsgemäß wird daher bevorzugt vorgeschlagen, zwei unsynchronisierte Kommunikationschips zu verwendet, die jeweils eine Antenne ansteuern. Die beiden Antennen haben dabei besonders bevorzugt Abstrahlcharakteristiken, die sich nicht oder nur sehr wenig überlappen. Dies ist erfindungsgemäß zwar besonders bevorzugt, allerdings nicht notwendig zur Ausführung der Erfindung.

Jede Fahrzeug-zu-X-Botschaft wird nun bevorzugt entweder über den einen Kommunikationschip oder über den anderen versendet, jedoch nicht über beide.

In einem bevorzugten Standardfall werden Fahrzeug-zu-X-Botschaften abwechselnd über die Kommunikationschips gesendet, so dass jede "Seite" des Fahrzeugs die Botschaften mit der halben Wiederholrate "sieht", bzw. die Fahrzeug-zu-X-Botschaften von jeder Antenne mittels der halben Wiederholrate abgestrahlt werden. Dabei kann es jedoch sein, dass wichtige Botschaften nicht schnell genug bei einem Empfänger ankommen. Daher ist es bevorzugt, dieses statische Sendemuster mittels der folgenden Kriterien, welche einzeln oder in beliebiger Kombination anwendbar sind, dynamisch anzupassen: Botschaften, die nur für eine Senderichtung relevant sind, werden auch nur über den entsprechenden Kommunikationschip versendet. So ist die sog. "DENM" für ein Notbremsmanöver nur für den rückwärtigen Verkehr interessant und braucht daher auch nur über diesen Kommunikationschip versendet zu werden. Ebenso verhält es sich mit der Warnung vor einem Liegenbleiber.
Aus der aktuellen Fahrsituation wird abgeschätzt, in welcher Richtung Botschaften eher gebraucht werden und dorthin entsprechend häufiger gesendet. So kann bei sehr schneller Fahrt auf der Autobahn davon ausgegangen werden, dass eher Fahrzeuge überholt werden und daher die eigenen Botschaften eher für die Fahrzeuge vor dem eigenen Fahrzeug relevant sind. Daher wird die sog. "CAM" häufiger nach vorne als nach hinten versendet, z.B. im Verhältnis 4:1. Bei einem LKW auf der Autobahn ist die Situation jedoch anders, hier werden bevorzugt die Fahrzeuge von hinten informiert, daher wird eher nach hinten gesendet, beispielsweise im Verhältnis 3:1.

Bei einem Überholvorgang ist es wichtig, dass die Fahrzeuge im Gegenverkehr informiert werden, weshalb vor allem nach vorne gesendet wird, beispielsweise im Verhältnis 5:1.
Abhängig von Kartenmaterial kann das Aussenden ebenfalls angepasst werden. So ist in der Nähe von Kreuzungen die Unterstützung eines Kreuzungsassistenzsystems wichtig, weshalb bevorzugt nach vorne gesendet wird.

Die Verteilung der Kommunikation auf die beiden Kommunikationschips bzw. Antennen kann zusätzlich von der tatsächlichen Abstrahlcharakteristik der Antennen abhängig gemacht werden. Würde bei der aktuellen Fahrsituation bzw. Geschwindigkeit die Abstrahlung mittels einer der Antennen als ausreichend erachtet für die am meisten gefährdeten Verkehrspartner, d.h., die Fahrzeuge in der Umgebung, sein, kann komplett auf das Senden über die zweite Antenne verzichtet werden. Das Umschalten würde nur dann verwendet, wenn die Abstrahlcharakteristik bei der aktuellen Fahrsituation bzw. Geschwindigkeit nicht mehr ausreichen würde, die am meisten gefährdeten Verkehrspartner zuverlässig zu erreichen.

Anstatt zwei Kommunikationschips zu verwenden, kann auch ein einzelner Kommunikationschip verwendet werden, an den ein sog. "SPDT RF-Schalter" angeschlossen wird. An diesen Schalter sind nun die beiden Antennen angeschlossen. Das Ansteuern der beiden Antennen erfolgt nun nicht über den Kommunikationschip, sondern über ein Umschalten des RF-Schalters. Dieser kann beispielsweise über einen sog. "GPIO" einer Steuer-ECU bzw. eines Mikrokontrollers angesteuert werden. Eine logische "0" kann dann z.B. bedeuten, dass die vordere Antenne angesteuert wird und eine logische "1" kann z.B. bedeuten, dass die hintere Antenne angesteuert wird.

Weiterhin ist es bevorzugt, dass nicht nur zwei Kommunikationschips und/oder zwei Antennen verwendet werden, sondern eine Vielzahl von Kommunikationschips und/oder Antennen.

Außerdem ist es bevorzugt vorgesehen, dass das Fahrzeug-zu-X-Kommunikationssystem in einem Fahrzeug angeordnet ist und im Fahrzeug verwendet wird, wobei die Antennen derart am Fahrzeug angeordnet sind, dass ein möglichst geringer Überlapp der Abstrahlcharakteristiken entsteht.

Die Erfindung zeigt somit eine Möglichkeit auf, mittels einer einfachen Integration von einem oder mehreren zusätzlichen Kommunikationschips bzw. Antennen bzw. RF-Schalter die Systemarchitektur einer entsprechenden Produktfamilie deutlich einfacher zu gestalten und vor allem die Basisvariante deutlich günstiger zu gestalten, als das beim Einsatz von diversityfähigen Kommunikationschips der Fall wäre.

Noch einfacher kann das Design u.U. gestaltet werden, wenn nur der Umschalter verwendet wird.

Weitere bevorzugte Ausführungsformen ergeben sich aus den Unteransprüchen und der nachfolgenden Beschreibung eines Ausführungsbeispiels an Hand von Figuren.

Es zeigen:

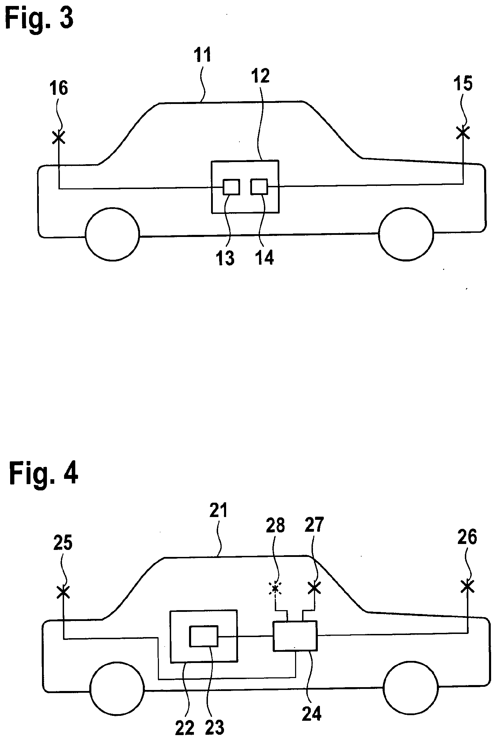

- Fig. 3: ein Fahrzeug mit einem Fahrzeug-zu-X-Kommunikationssystem, das zwei Kommunikationschips und zwei Antennen umfasst, und
- Fig. 4: ein Fahrzeug mit einem Fahrzeug-zu-X-Kommunikationssystem, das einen Kommunikationschip, vier Antennen und einen RF-Schalter umfasst.

Fig. 3 zeigt Fahrzeug 11 mit Fahrzeug-zu-X-Kommunikationssystem 12. Fahrzeug-zu-X-Kommunikationssystem umfasst zwei voneinander unabhängige Kommunikationschips 13 und 14, die insbesondere nicht synchronisiert sind. Jedem von Kommunikationschips 13 und 14 ist eine von Antennen 15 und 16 zugeordnet. Antennen 15 ist dabei derart an Fahrzeug 11 angeordnet, dass sie hauptsächlich in Fahrtrichtung von Fahrzeug 11 abstrahlt sowie teilweise zu beiden Seiten von Fahrzeug 11 abstrahlt. Antenne 16 hingegen ist derart an Fahrzeug 11 angeordnet, dass sie hauptsächlich entgegen der Fahrtrichtung von Fahrzeug 11 abstrahlt sowie teilweise zu beiden Seiten von Fahrzeug 11 abstrahlt. Somit ergibt sich nur links und rechts von Fahrzeug 11 ein geringer Überlapp in den Abstrahlcharakteristiken von Antennen 15 und 16. Beim Versenden einer Fahrzeug-zu-X-Botschaft wählt Fahrzeug-zu-X-Kommunikationssystem 12 situationsabhängig nach vorgegebenen Auswahlkriterien aus, mittels welcher von Antennen 15 und 16 die jeweilige Fahrzeug-zu-X-Botschaft versendet wird.

Fig. 4 zeigt Fahrzeug 21 mit Fahrzeug-zu-X-Kommunikationssystem 22. Fahrzeug-zu-X-Kommunikationssystem umfasst Kommunikationschips 23 und RF-Schalter 24 oder eine Antennenweiche. An Fahrzeug 21 angeordnet und mit RF-Schalter 24 elektrisch verbunden sind außerdem Antennen 25, 26, 27 und 28. Antenne 28 ist auf der dem Betrachter in Fig. 4 gegenüberliegenden Seite von Fahrzeug 21 angeordnet und zur Veranschaulichung dieses Umstands gestrichelt dargestellt. Antennen 25, 26, 27 und 28 weisen außerdem aufgrund ihrer Bauart eine Abstrahlcharakteristik bzw. Richtcharakteristik auf, welche ein hauptsächliches Abstrahlen in einem Winkel von weniger als 180° bewirkt. Antenne 25 ist derart an Fahrzeug 21 angeordnet und ausgerichtet, dass sie hauptsächlich entgegen der Fahrtrichtung von Fahrzeug 21 abstrahlt. Antenne 26 ist derart an Fahrzeug 21 angeordnet und ausgerichtet, dass sie hauptsächlich in Fahrtrichtung von Fahrzeug 21 abstrahlt. Antenne 27 ist derart an Fahrzeug 21 angeordnet und ausgerichtet, dass sie hauptsächlich zu einem Betrachter von Fig. 4 abstrahlt. Antenne 28 ist derart an Fahrzeug 21 angeordnet und ausgerichtet, dass sie hauptsächlich weg von einem Betrachter von Fig. 4 abstrahlt. Beim Versenden einer Fahrzeug-zu-X-Botschaft steuert Fahrzeug-zu-X-Kommunikationssystem 22 situationsabhängig nach vorgegebenen Auswahlkriterien RF-Schalter 24 derart an, dass die jeweilige Fahrzeug-zu-X-Botschaft mit jeweils ausgewählter Antenne 25, 26, 27 oder 28 versendet wird.

Nachfolgend soll noch eine systematische Aufzählung einiger Aspekte erfolgen. Es handelt sich dabei nicht um die Patentansprüche dieser Anmeldung, es sei jedoch verstanden, dass die nachfolgende Aufzählung als Patentansprüche verwendet werden können.
1. Fahrzeug-zu-X-Kommunikationssystem zum Senden einer Fahrzeug-zu-X-Botschaft in eine ausgewählte Raumrichtung,
   wobei das Fahrzeug-zu-X-Kommunikationssystem einen Kommunikationschip und mindestens zwei Antennen umfasst,
   dadurch gekennzeichnet,
   dass das Fahrzeug-zu-X-Kommunikationssystem mindestens einen weiteren Kommunikationschip und/oder mindestens einen RF-Schalter umfasst.
2. System nach Aspekt 1,
   dadurch gekennzeichnet,
   dass die Kommunikationschips nicht synchronisiert sind und jeder der Kommunikationschips nicht diversityfähig ist.
3. System nach mindestens einem der Aspekte 1 und 2,
   dadurch gekennzeichnet,
   dass die Antennen in unterschiedliche Raumrichtungen abstrahlen.
4. System nach mindestens einem der Aspekte 1 bis 3,
   dadurch gekennzeichnet,
   dass jedem Kommunikationschip eine Antenne zugeordnet ist.
5. System nach mindestens einem der Aspekte 1 bis 4,
   dadurch gekennzeichnet,
   dass der RF-Schalter dem einzigen Kommunikationschip des Systems zugeordnet ist und alle Antennen des Systems dem RF-Chip zugeordnet sind.
6. System nach mindestens einem der Aspekte 1 bis 5,
   dadurch gekennzeichnet,
   dass die Antennen jeweils oder teilweise eine Richtcharakteristik aufweisen.
7. System nach mindestens einem der Aspekte 1 bis 6,
   dadurch gekennzeichnet,
   dass die Abstrahlcharakteristiken der Antennen im Wesentlichen nicht überlappen.
8. Verfahren zum Senden einer Fahrzeug-zu-X-Botschaft in eine ausgewählte Raumrichtung,
   wobei die Fahrzeug-zu-x-Botschaft von einem Fahrzeug-zu-X-Kommunikationssystem nach mindestens einem der Aspekte 1 bis 7 versendet wird,
   dadurch gekennzeichnet,
   dass situationsabhängig mindestens eine Antenne zum Senden der Fahrzeug-zu-x-Botschaft ausgewählt wird.
9. Verwendung des Fahrzeug-zu-X-Kommunikationssystems nach mindestens einem der Aspekte 1 bis 7 in einem Fahrzeug, insbesondere in einem Kraftfahrzeug.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Fahrzeug-zu-X-Kommunikationssystem (105) für ein Fahrzeug (100), aufweisend:
- eine erste Antenne (140),
- eine zweite Antenne (150), und
- eine Kommunikationseinheit, welche mit der ersten Antenne (140) und der zweiten Antenne (150) zum Senden von Signalen über die Antennen (140, 150) verbunden ist,
- wobei die Kommunikationseinheit dazu ausgebildet ist, ein Signal, welches Teil einer Fahrzeug-zu-X-Kommunikation ist, selektiv über die erste Antenne (140) oder über die zweite Antenne (150) zu senden, **dadurch gekennzeichnet, dass** die Kommunikationseinheit dazu ausgebildet ist, eine Mehrzahl von in jeweiligen Zeitabständen zueinander beabstandeten Signalen entsprechend eines Sendemusters zu senden,
- wobei das Sendemuster vorgibt, in welcher Reihenfolge Signale über die erste Antenne (140) oder die zweite Antenne (150) gesendet werden.

2. Fahrzeug-zu-X-Kommunikationssystem (105) nach Anspruch 1, **dadurch gekennzeichnet, dass**
- die Kommunikationseinheit dazu ausgebildet ist, das Signal entweder ausschließlich über die erste Antenne (140) zu senden oder ausschließlich über die zweite Antenne (150) zu senden.

3. Fahrzeug-zu-X-Kommunikationssystem (105) nach einem der vorhergehenden Ansprüche, **dadurch gekennzeichnet, dass**
- die Kommunikationseinheit dazu ausgebildet ist, beim Senden eines Signals über die erste Antenne (140) das Signal nicht gleichzeitig über die zweite Antenne (150) zu senden und beim Senden eines Signals über die zweite Antenne (150) das Signal nicht gleichzeitig über die erste Antenne (140) zu senden.

4. Fahrzeug-zu-X-Kommunikationssystem (105) nach einem der vorhergehenden Ansprüche, **dadurch gekennzeichnet, dass**
- die Kommunikationseinheit dazu ausgebildet ist, in Abhängigkeit von der Art von zu sendenden Signalen und/oder in Abhängigkeit von einer Verkehrssituation und/oder in Abhängigkeit von Fahrparametern zu entscheiden, ob das Signal über die erste Antenne (140) oder über die zweite Antenne (150) gesendet wird.

5. Fahrzeug-zu-X-Kommunikationssystem (105) nach einem der vorhergehenden Ansprüche, **dadurch gekennzeichnet, dass**
- die Kommunikationseinheit dazu ausgebildet ist, ein Signal, welches für Verkehrsteilnehmer hinter dem Fahrzeug (100) nicht oder nur wenig relevant ist und/oder welches nur oder überwiegend für Verkehrsteilnehmer vor dem Fahrzeug (100) relevant ist, ausschließlich über die erste Antenne (140) zu senden.

6. Fahrzeug-zu-X-Kommunikationssystem (105) nach einem der vorhergehenden Ansprüche, **dadurch gekennzeichnet, dass**
- die Kommunikationseinheit dazu ausgebildet ist, ein Signal, welches für Verkehrsteilnehmer vor dem Fahrzeug (100) nicht oder nur wenig relevant ist und/oder welches nur oder überwiegend für Verkehrsteilnehmer hinter dem Fahrzeug (100) relevant ist, ausschließlich über die zweite Antenne (150) zu senden.

7. Fahrzeug-zu-X-Kommunikationssystem (105) nach einem der vorhergehenden Ansprüche, **dadurch gekennzeichnet, dass**
- die Kommunikationseinheit dazu ausgebildet ist, ein Sendemuster in Abhängigkeit von der Art von zu sendenden Signalen und/oder in Abhängigkeit von einer Verkehrssituation und/oder in Abhängigkeit von Fahrparametern festzulegen.

8. Fahrzeug-zu-X-Kommunikationssystem (105) nach Anspruch 7, **dadurch gekennzeichnet, dass**
- die Kommunikationseinheit dazu ausgebildet ist, das Sendemuster derart festzulegen, dass ein Anteil von Sendungen über die erste Antenne (140) um so höher ist, je irrelevanter die Signale für Verkehrsteilnehmer hinter dem Fahrzeug (100) sind und/oder je relevanter die Signale für Verkehrsteilnehmer vor dem Fahrzeug (100) sind.

9. Fahrzeug-zu-X-Kommunikationssystem (105) nach Anspruch 7 oder 8, **dadurch gekennzeichnet, dass**
- die Kommunikationseinheit dazu ausgebildet ist, das Sendemuster derart festzulegen, dass ein Anteil von Sendungen über die zweite Antenne (150) um so höher ist, je irrelevanter die Signale für Verkehrsteilnehmer vor dem Fahrzeug (100) sind und/oder je relevanter die Signale für Verkehrsteilnehmer hinter dem Fahrzeug (100) sind.

10. Fahrzeug-zu-X-Kommunikationssystem (105) nach einem der vorhergehenden Ansprüche, **dadurch gekennzeichnet, dass**
- die Kommunikationseinheit eine erste Sendeeinheit (120) aufweist, welche mit der ersten Antenne (140) verbunden ist, eine zweite Sendeeinheit (130) aufweist, welche mit der zweiten Antenne (150) verbunden ist, und eine Steuerungseinheit (110) aufweist, welche mit der ersten Sendeeinheit (120) und mit der zweiten Sendeeinheit (130) verbunden ist,
- wobei die Steuerungseinheit (110) dazu ausgebildet ist, zur Sendung eines Signals über die erste Antenne (140) die erste Sendeeinheit (120) anzusteuern und zur Sendung eines Signals über die zweite Antenne (150) die zweite Sendeeinheit (130) anzusteuern.

11. Fahrzeug-zu-X-Kommunikationssystem (105) nach einem der Ansprüche 1 bis 9, **dadurch gekennzeichnet, dass**
- die Kommunikationseinheit eine Antennenweiche (160), eine Sendeeinheit (120) und eine Steuerungseinheit (110) aufweist,
- wobei die Antennenweiche (160) mit der ersten Antenne (140), der zweiten Antenne (150) und der Sendeeinheit (120) verbunden ist, und
- wobei die Steuerungseinheit (110) dazu ausgebildet ist, mittels der Antennenweiche (160) auszuwählen, ob ein Signal über die erste Antenne (140) oder über die zweite Antenne (150) gesendet werden soll.

12. Fahrzeug-zu-X-Kommunikationssystem (105) nach einem der vorhergehenden Ansprüche, **dadurch gekennzeichnet, dass**
- die Kommunikationseinheit dazu ausgebildet ist, Signale ausschließlich über eine der Antennen (140, 150) zu senden, wenn sie ermittelt hat, dass das Senden über diese Antenne (140, 150) in einer aktuellen Verkehrssituation und/oder bei aktuellen Fahrparametern für die meisten Verkehrsteilnehmer ausreichend ist, und
- die Kommunikationseinheit dazu ausgebildet ist, Signale auch über die andere Antenne (140, 150) zu senden, wenn sie ermittelt hat, dass das Senden über nur eine Antenne (140, 150) in der aktuellen Verkehrssituation und/oder bei den aktuellen Fahrparametern für die meisten Verkehrsteilnehmer nicht mehr ausreichend ist.

13. Fahrzeug mit einem Fahrzeug-zu-X-Kommunikationssystem (105) nach einem der vorhergehenden Ansprüche,
- wobei die erste Antenne (140) und die zweite Antenne (150) derart an dem Fahrzeug (100) angeordnet sind, dass sie mit jeweiligen Abstrahlcharakteristika abstrahlen,
- wobei sich die Abstrahlcharakteristika bevorzugt nicht oder nur wenig überlappen.

14. Verfahren zum Senden von Fahrzeug-zu-X-Nachrichten, welches folgende Schritte aufweist:
- Erzeugen eines Signals, welches eine jeweilige Fahrzeug-zu-X-Nachricht enthält,
- Bestimmen, ob das Signal über eine erste Antenne (140) oder eine zweite Antenne (150) zu senden ist, und
- abhängig davon selektives Senden des Signals über die erste Antenne (140) oder die zweite Antenne (150), **dadurch gekennzeichnet, dass** eine Mehrzahl von in jeweiligen Zeitabständen zueinander beabstandeten Signalen entsprechend eines Sendemusters gesendet werden,
- wobei das Sendemuster vorgibt, in welcher Reihenfolge Signale über die erste Antenne (140) oder die zweite Antenne (150) gesendet werden.

## Claims

1. A vehicle-to-X communication system (105) for a vehicle (100), comprising:
- a first antenna (140),
- a second antenna (150), and
- a communication unit which is connected to the first antenna (140) and the second antenna (150) in order to transmit signals via the antennas (140, 150),
- wherein the communication unit is designed to transmit a signal, which is part of a vehicle-to-X communication, selectively via the first antenna (140) or via the second antenna (150), **characterized in that** the communication unit is designed to transmit a multiplicity of signals which are spaced apart from one another at respective time intervals, according to a transmission pattern,
- wherein the transmission pattern predefines a sequence in which signals are transmitted via the first antenna (140) or the second antenna (150).

2. The vehicle-to-X communication system (105) according to Claim 1, **characterized in that**
- the communication unit is designed to transmit the signal either exclusively via the first antenna (140) or exclusively via the second antenna (150).

3. The vehicle-to-X communication system (105) according to any one of the preceding claims, **characterized in that**
- the communication unit is designed, when transmitting a signal via the first antenna (140), not to transmit the signal simultaneously via the second antenna (150), and when transmitting a signal via the second antenna (150), not to transmit the signal simultaneously via the first antenna (140).

4. The vehicle-to-X communication system (105) according to any one of the preceding claims, **characterized in that**
- the communication unit is designed to decide, as a function of the type of signals to be transmitted and/or as a function of a traffic situation and/or as a function of driving parameters, whether the signal is transmitted via the first antenna (140) or via the second antenna (150).

5. The vehicle-to-X communication system (105) according to any one of the preceding claims, **characterized in that**
- the communication unit is designed to transmit a signal which is not relevant, or is only of little relevance, for road users behind the vehicle (100) and/or which is relevant only or predominantly for road users in front of the vehicle (100), exclusively via the first antenna (140).

6. The vehicle-to-X communication system (105) according to any one of the preceding claims, **characterized in that**
- the communication unit is designed to transmit a signal which is not relevant, or is only of little relevance, for road users in front of the vehicle (100) and/or which is relevant only or predominantly for road users behind the vehicle (100), exclusively via the second antenna (150).

7. The vehicle-to-X communication system (105) according to any one of the preceding claims, **characterized in that**
- the communication unit is designed to define a transmission pattern as a function of the type of signals to be transmitted and/or as a function of a traffic situation and/or as a function of driving parameters.

8. The vehicle-to-X communication system (105) according to Claim 7, **characterized in that** the communication unit is designed to define the transmission pattern in such a way that a proportion of transmissions via the first antenna (140) is higher the less relevant the signals are for road users behind the vehicle (100) and/or the more relevant the signals are for road users in front of the vehicle (100).

9. The vehicle-to-X communication system (105) according to Claim 7 or 8, **characterized in that**
- the communication unit is designed to define the transmission pattern in such a way that a proportion of transmissions via the second antenna (150) is higher the less relevant the signals are for road users in front of the vehicle (100) and/or the more relevant the signals are for road users behind the vehicle (100).

10. The vehicle-to-X communication system (105) according to any one of the preceding claims, **characterized in that**
- the communication unit comprises a first transmitter unit (120) which is connected to the first antenna (140), a second transmitter unit (130) which is connected to the second antenna (150), and a control unit (110) which is connected to the first transmitter unit (120) and to the second transmitter unit (130),
- wherein the control unit (110) is designed to actuate the first transmitter unit (120) to transmit a signal via the first antenna (140), and to actuate the second transmitter unit (130) to transmit a signal via the second antenna (150).

11. The vehicle-to-X communication system (105) according to any one of Claims 1 to 9, **characterized in that**
- the communication unit has an antenna combiner (160), a transmitter unit (120) and a control unit (110),
- wherein the antenna combiner (160) is connected to the first antenna (140), the second antenna (150) and the transmitter unit (120), and
- wherein the control unit (110) is designed to select, by the antenna combiner (160), whether a signal is to be transmitted via the first antenna (140) or via the second antenna (150).

12. The vehicle-to-X communication system (105) according to any one of the preceding claims, **characterized in that**
- the communication unit is designed to transmit signals exclusively via one of the antennas (140, 150) if the communication unit has determined that the transmission via these antennas (140, 150) is sufficient for most of the road users in a current traffic situation and/or given current driving parameters, and
- the communication unit is designed to transmit signals also via the other antenna (140, 150) if the communication unit has determined that the transmission via just one antenna (140, 150) is no longer sufficient for most of the road users in the current traffic situation and/or given the current driving parameters.

13. A vehicle having a vehicle-to-X communication system (105) according to any one of the preceding claims,
wherein the first antenna (140) and the second antenna (150) are arranged on the vehicle (100) in such a way that they irradiate with respective irradiation characteristics, wherein the irradiation characteristics preferably do not overlap or only overlap slightly.

14. A method for transmitting vehicle-to-X messages which comprises the following steps:
generating a signal which contains a respective vehicle-to-X message,
determining whether the signal is to be transmitted via a first antenna (140) or a second antenna (150), and
selective transmission of the signal as a function thereof via the first antenna (140) or the second antenna (150), **characterized in that** a multiplicity of signals which are spaced apart from one another are transmitted at respective time intervals according to a transmission pattern,
wherein the transmission pattern predefines a sequence in which signals are transmitted via the first antenna (140) or the second antenna (150).

## Revendications

1. Système de communication de véhicule à X (105) pour un véhicule (100), présentant :
- une première antenne (140),
- une deuxième antenne (150), et
- une unité de communication, laquelle est reliée à la première antenne (140) et à la deuxième antenne (150) pour l'émission de signaux par les antennes (140, 150),
- l'unité de communication étant formée afin d'émettre de façon sélective un signal, lequel fait partie d'une communication de véhicule à X, par la première antenne (140) ou par la deuxième antenne (150), **caractérisé en ce que** l'unité de communication est formée afin d'émettre, conformément à un modèle d'émission, une multiplicité de signaux espacés entre eux à des intervalles temporels respectifs,
- le modèle d'émission prédéfinissant dans quelle séquence les signaux sont envoyés par la première antenne (140) ou par la deuxième antenne (150).

2. Système de communication de véhicule à X (105) selon la revendication 1, **caractérisé en ce que**
- l'unité de communication est formée afin d'émettre le signal soit exclusivement par la première antenne (140), soit exclusivement par la deuxième antenne (150).

3. Système de communication de véhicule à X (105) selon l'une des revendications précédentes, **caractérisé en ce que**
- l'unité de communication est formée afin, lors de l'émission d'un signal par la première antenne (140), de ne pas émettre simultanément le signal par la deuxième antenne (150), et, lors de l'émission d'un signal par la deuxième antenne (150), de ne pas émettre simultanément le signal par la première antenne (140).

4. Système de communication de véhicule à X (105) selon l'une des revendications précédentes, **caractérisé en ce que**
- l'unité de communication est formée afin de décider, en fonction du type de signaux devant être envoyés et/ou en fonction d'une situation de trafic et/ou en fonction de paramètres de conduite, si le signal doit être envoyé par la première antenne (140) ou par la deuxième antenne (150).

5. Système de communication de véhicule à X (105) selon l'une des revendications précédentes, **caractérisé en ce que**
- l'unité de communication est formée afin d'émettre un signal, lequel n'est pas pertinent ou uniquement peu pertinent pour des usagers de la route derrière le véhicule (100) et/ou lequel est uniquement ou principalement pertinent pour des usagers de la route devant le véhicule (100), exclusivement par la première antenne (140) .

6. Système de communication de véhicule à X (105) selon l'une des revendications précédentes, **caractérisé en ce que**
- l'unité de communication est formée afin d'émettre un signal, lequel n'est pas pertinent ou uniquement peu pertinent pour des usagers de la route devant le véhicule (100) et/ou lequel est uniquement ou principalement pertinent pour des usagers de la route derrière le véhicule (100), exclusivement par la deuxième antenne (150).

7. Système de communication de véhicule à X (105) selon l'une des revendications précédentes, **caractérisé en ce que**
- l'unité de communication est formée afin de définir un modèle d'émission en fonction du type de signaux devant être envoyés et/ou en fonction d'une situation de trafic et/ou en fonction de paramètres de conduite.

8. Système de communication de véhicule à X (105) selon la revendication 7, **caractérisé en ce que**
l'unité de communication est formée afin de définir le modèle d'émission de telle sorte que, moins les signaux pour les usagers de la route derrière le véhicule (100) sont pertinents et/ou plus les signaux pour les usagers de la route devant le véhicule (100) sont pertinents, plus une part des émissions par la première antenne (140) est élevée.

9. Système de communication de véhicule à X (105) selon la revendication 7 ou 8, **caractérisé en ce que**
- l'unité de communication est formée afin de définir le modèle d'émission de telle sorte que, moins les signaux pour les usagers de la route devant le véhicule (100) sont pertinents et/ou plus les signaux pour les usagers de la route derrière le véhicule (100) sont pertinents, plus une part des émissions par la deuxième antenne (150) est élevée.

10. Système de communication de véhicule à X (105) selon l'une des revendications précédentes, **caractérisé en ce que**
- l'unité de communication présente une première unité d'émission (120), laquelle est reliée à la première antenne (140), une deuxième unité d'émission (130), laquelle est reliée à la deuxième antenne (150), et une unité de commande (110), laquelle est reliée à la première unité d'émission (120) et à la deuxième unité d'émission (130),
- l'unité de commande (110) étant formée afin d'activer la première unité d'émission (120) pour l'émission d'un signal par la première antenne (140) et d'activer la deuxième unité d'émission (130) pour l'émission d'un signal par la deuxième antenne (150).

11. Système de communication de véhicule à X (105) selon l'une des revendications 1 à 9, **caractérisé en ce que**
- l'unité de communication présente un séparateur d'antennes (160), une unité d'émission (120) et une unité de commande (110),
- le séparateur d'antennes (160) étant relié à la première antenne (140), à la deuxième antenne (150) et à l'unité d'émission (120), et
- l'unité de commande (110) étant formée afin de sélectionner, au moyen du séparateur d'antennes (160), si un signal doit être envoyé par la première antenne (140) ou par la deuxième antenne (150) .

12. Système de communication de véhicule à X (105) selon l'une des revendications précédentes, **caractérisé en ce que**
- l'unité de communication est formée afin d'émettre des signaux exclusivement par une des antennes (140, 150) lorsqu'elle a déterminé que l'émission par cette antenne (140, 150) est suffisante pour la plupart des usagers de la route, dans une situation de trafic actuelle et/ou pour des paramètres de conduite actuels, et **en ce que**
- l'unité de communication est formée afin d'émettre aussi des signaux par l'autre antenne (140, 150) lorsqu'elle a déterminé que l'émission par une antenne (140, 150) uniquement n'est plus suffisante pour la plupart des usagers de la route, dans la situation de trafic actuelle et/ou pour les paramètres de conduite actuels.

13. Système de communication de véhicule à X (105) selon l'une des revendications précédentes,
- la première antenne (140) et la deuxième antenne (150) étant disposées sur le véhicule (100) de telle sorte qu'elles émettent avec des caractéristiques d'émission respectives,
- les caractéristiques d'émission ne se chevauchant pas ou se chevauchant uniquement peu, de préférence.

14. Procédé pour l'émission de messages de véhicule à X, lequel présente les étapes suivantes :
- génération d'un signal, lequel contient un message de véhicule à X respectif,
- détermination du fait de savoir si le signal doit être envoyé par une première antenne (140) ou par une deuxième antenne (150), et
- en fonction de ceci, émission sélective du signal par la première antenne (140) ou par la deuxième antenne (150), **caractérisé en ce qu'**une multiplicité de signaux espacés entre eux à des intervalles temporels respectifs est envoyée conformément à un modèle d'émission,
- le modèle d'émission prédéfinissant dans quelle séquence les signaux sont envoyés par la première antenne (140) ou par la deuxième antenne (150).
